# EUROPÄISCHE PATENTSCHRIFT

(11) **EP 1 645 874 B1**
(45) Veröffentlichungstag und Bekanntmachung des Hinweises auf die Patenterteilung: **06.02.2008**
(21) Anmeldenummer: 04023706.7
(22) Anmeldetag: 05.10.2004
(51) Int. Cl.: G01N 33/20

(54) **Diffusionssensor, Verfahren zu dessen Herstellung und Verfahren zum Überwachen des Fortschrittes eines Diffusionsprozesses**
Diffusion sensor, method of manufacturing the same and method for monitoring the progress of a diffusion prozess
Capteur de diffusion, méthode de sa production et méthode pour contrôler le progrès d'un procédé de diffusion

(43) Veröffentlichungstag der Anmeldung: 12.04.2006
(73) Patentinhaber: SIEMENS AKTIENGESELLSCHAFT, 80333 München (DE)
(72) Erfinder: Dernovsek, Oliver, Dr., 8054 Graz (AT); Reiche, Ralph, 13465 Berlin (DE); Wersing, Wolfram, 83346 Bergen (DE)

(56) Entgegenhaltungen:
- DE-A1- 3 721 254
- US-B1- 6 410 159
- MÖNCH G C: "Thermo e.m.f. Te/metal. (Experiments on the properties of tellurium/metal assemblies as fast thermoelements)" ANNALEN DER PHYSIK GERMANY, Bd. 12, Nr. 4-6, 1. Januar 1953 (1953-01-01), Seiten 161-174, XP008044037
- WWW.OMEGA.COM, [Online] 8. März 2003 (2003-03-08), XP002320301 Gefunden im Internet: URL:www.omega.com/temperature/Z/pdf/z036-0 40.pdf> [gefunden am 2005-03-07]

## Beschreibung

Die vorliegende Erfindung betrifft einen Diffusionssensor zum Überwachen des Fortschrittes eines Diffusionsprozesses, in welchem ein erstes Metall von der Oberfläche eines zweiten Metalls ausgehend in das zweite Metall einfundiert, ein Verfahren zum Herstellen eines derartigen Diffusionssensors sowie ein Verfahren zum Überwachen des Fortschrittes eines Diffusionsprozesses.

Beim Aufbringen und beim Entfernen von funktionalen Beschichtungen, etwa auf Turbinenschaufeln, sowie von thermisch abgeschiedenen Diffusionsbarrieren ist eine exakte temperatur- und zeitabhängige Prozessführung von großer Bedeutung. Die Steuerung der Abscheide- bzw. Diffusionsprozesse basiert in der Regel auf langjähriger empirischer Datenerfassung. Ein häufiges Problem sind hierbei variierende Prozessparameter. Beispielsweise können die Atmosphärenzusammensetzungen, die Schichtdicken, die Temperaturgradienten während des Prozesses sowie die Prozessdauer variieren. Außerdem können komplexe Formgebungen des Bauteils, welches dem Diffusions- oder Abscheideprozess unterzogen werden soll, zu lokal unterschiedlichen Diffusions- bzw. Abscheidungsverläufen führen. Insbesondere wenn Hinterschneidungen vorhanden sind, können große Unterschiede in den lokalen Abscheide- bzw. Diffusionsraten auftreten. Aufgrund der genannten Probleme ist eine aufwendige optische und metallographische Nachkontrolle der abgeschiedenen Schichten bzw. der Diffusionsschichten nötig, welche eine Zerstörung einzelner Bauteile beinhaltet.

Das Ermitteln der komplexen Prozessparameter der Abscheidung bzw. der Diffusion erfolgt wie oben erwähnt mit Hilfe empirischer Messdaten. Erfahrungswerte aus der Verfahrenstechnik (bspw. für die Temperatur, die Prozessdauer und die Gaskonzentration) werden direkt auf die Abscheide- bzw. Diffusionstechnologie übertragen. So werden etwa bei der Wiederaufarbeitung (Refurbishment) von Turbinenschaufeln metallische Schutzschichten bzw. Haftvermittlerschichten auf Superlegierungen auf Nickelbasis entfernt, indem eine Eindiffusion von Aluminium in die Schutz- bzw. Haftvermittlerschicht bei Temperaturen ≥ ca. 1000° C veranlasst wird. Anschließend wird die Turbinenschaufel einem Säurebad ausgesetzt, welches die Schutz- bzw. Haftvermittlerschicht mit dem eindiffundierten Aluminium auflöst. In diesem Wiederaufarbeitungsverfahren erfolgt das Steuern des komplexen Diffusionsprozesses durch langjährige Erfahrung, ohne bisher eine exakte Korrelation zwischen den Steuerparametern, etwa der Prozesstemperatur, der Prozessdauer, der verwendeten Atmosphärenzusammensetzung, der Diffusionsgeschwindigkeit, des Partialdruckes, etc. voraussagen zu können.

Es besteht daher ein Bedarf an Diffusionssensoren und Verfahren zum Überwachen des Fortschrittes eines Diffusionsprozesses. Herkömmliche Verfahren zum Verfolgen und Steuern von Abscheide- bzw. Diffusionsprozessen basieren auf der Verwendung von Hochtemperatursensoren. Im Bereich der Temperaturmessung kommen dabei Thermoelemente, beispielsweise mit der Zusammensetzung Platin (Pt) und Platin-Rhodium (PtRh) zur Anwendung. Im Bereich der Druckmessung finden beispielsweise piezoresistive Pasten Anwendung. Die im Stand der Technik verwendeten Hochtemperatursensoren sind jedoch in korrosiven Atmosphären, wie etwa Aluminiumchlorid(AlCl₃)-Heißgasatmosphären, nicht langzeitbeständig. Ein Nachteil dieser Sensoren ist daher, dass durch die eingeschränkte Erfassungsdauer nur Teildaten erfasst werden und so der komplexe Abscheide- bzw. Diffusionsprozess nur unvollständig erfasst wird.

Die DE 37 21 254 A1 offenbart einen Sensor zur Erfassung des aktuellen Behandlungszustandes wie Diffusionstiefe, Verbindungsschichtbildung, Porensaum, Einhärtungstiefe, ..., der bei thermochemischen Randschichtwärmebehandlungen von metallischen Festkörpern eingesetzt wird. Als physikalische Messgrößen dienen für den Sensor die komplexe elektromagnetische Impedanz und Admittanz.

Es ist daher eine Aufgabe der Erfindung, einen verbesserter Sensor und ein verbessertes Verfahren zum Überwachen des Fortschrittes eines Diffusionsprozesses zur Verfügung zu stellen.

Eine weitere Aufgabe ist es, ein Verfahren zum Herstellen eines erfindungsgemäßen Diffusionssensors zur Verfügung zu stellen.

Die erste Aufgabe wird durch einen Diffusionssensor nach Anspruch 1 bzw. ein Verfahren zum Überwachen des Fortschrittes eines Diffusionsprozesses nach Anspruch 13 gelöst. Die zweite Aufgabe wird durch ein Verfahren zum Herstellen eines Diffusionssensors nach Anspruch 7 gelöst. Die abhängigen Ansprüche enthalten vorteilhafte Weiterbildungen der Erfindung.

Ein erfindungsgemäßer Diffusionssensor zum Überwachen des Fortschrittes eines Diffusionsprozesses, in welchem ein erstes Metall in zweites Metall (bspw. von der Oberfläche des zweiten Metalls ausgehend) einfundiert, umfasst eine Messschicht aus zweitem Metall, welche eine bestimmte Schichtdicke besitzt. Er umfasst weiterhin eine Messzone, die derart ausgestaltet ist, dass während des Diffusionsprozesses erstes Metall im Bereich der Messzone (bspw. von der Oberfläche der Messschicht ausgehend) in die Messschicht eindiffundieren kann, und eine Referenzzone, die derart ausgestaltet ist, dass die Messschicht während des Diffusionsprozesses im Bereich der Referenzzone gegen ein Eindringen von erstem Metall geschützt ist. Des Weiteren umfasst der erfindungsgemäße Diffusionssensor einen ersten Metallabschnitt, welcher aus einem dritten Metall besteht und im Bereich der Messzone eine Grenzfläche mit der Messschicht aufweist. Wenn die Diffusion von einer Oberfläche der Messschicht ausgeht, kann sich die Grenzfläche insbesondere an derjenigen Seite der Messschicht befinden, die dieser Oberfläche gegenüberliegt. Schließlich umfasst der erfindungsgemäße Diffusionssensor einen zweiten Metallabschnitt, welcher aus dem dritten oder einem vierten Metall besteht und im Bereich der Referenzzone eine Grenzfläche mit der Messschicht aufweist.

Im erfindungsgemäßen Diffusionssensor stellt die Messschicht zusammen mit dem ersten Metallabschnitt und dem zweiten Metallabschnitt ein Thermoelement dar, bei dem an den beiden Grenzflächen jeweils eine Kontaktspannung auftritt. Falls der erste und der zweite Metallabschnitt aus demselben Metall bestehen, weisen die Kontaktspannungen an den beiden Grenzflächen denselben Betrag und ein entgegengesetztes Vorzeichen auf, sofern die beiden Grenzflächen dieselbe Temperatur aufweisen. Wird in diesem Fall die Spannungsdifferenz zwischen den beiden Metallabschnitten gemessen, so ergibt die Messung den Wert Null.

Bei der herkömmlichen Verwendung eines Thermoelementes wird die Tatsache ausgenutzt, dass die Kontaktspannung einer Grenzfläche von der Temperatur dieser Grenzfläche abhängt. Bei Vorliegen unterschiedlicher Temperaturen an den Grenzflächen sind auch die Beträge der an den Grenzflächen entstehenden Kontaktspannungen unterschiedlich, so dass zwischen den beiden Metallabschnitten eine Spannungsdifferenz ungleich Null zu messen ist. Aus dem Wert der Spannungsdifferenz lässt sich auf die Temperaturdifferenz zwischen den beiden Grenzflächen schließen.

Im erfindungsgemäßen Diffusionssensor kommt das Thermoelement jedoch anders zum Einsatz. Die Kontaktspannung einer Grenzfläche ändert sich nämlich auch, wenn sich die Zusammensetzung der Messschicht im Bereich dieser Grenzfläche ändert, da die an der Grenzfläche entstehende Kontaktspannung auch von der Zusammensetzung der dort aneinander grenzenden Metalle abhängt. Im erfindungsgemäßen Diffusionssensor ist nun eine der beiden Grenzflächen in einer Messzone angeordnet, welche das Eindiffundieren von erstem Metall in die Messschicht aus dem zweiten Metall ermöglicht. Beim Fortschreiten des Diffusionsprozesses wird sich daher die Zusammensetzung der Messschicht im Bereich dieser Grenzfläche verändern, so dass sich die an der Grenzfläche auftretende Kontaktspannung ändert. Die zweite Grenzfläche, d.h. die Grenzfläche zwischen der Messschicht und dem zweiten Metallabschnitt, ist hingegen gegen ein Eindiffundieren des ersten Metalls geschützt, so dass die an dieser Grenzfläche auftretende Kontaktspannung während des Diffusionsprozesses im Wesentlichen konstant bleibt. Als Ergebnis verändert sich die zwischen den beiden Metallabschnitten zu messende Spannungsdifferenz während des Diffusionsprozesses. Diese Änderung der gemessenen Spannungsdifferenz kann als Maß für den Fortschritt der Diffusion Verwendung finden.

Der erfindungsgemäße Diffusionssensor erlaubt daher eine Überwachung des Fortschrittes des Diffusionsprozesses in Echtzeit. Dazu kann der Diffusionssensor etwa zusammen mit einem Werkstück, in dem bspw. eine Diffusion in einer Beschichtung stattfinden soll, dem eindiffundierenden ersten Metall ausgesetzt werden. Die Messschicht sollte dabei im Wesentlichen dieselbe Zusammensetzung aufweisen wie die Beschichtung des Werkstückes.

Es sei noch darauf hingewiesen, dass der erste Metallabschnitt und der zweite Metallabschnitt nicht notwendigerweise aus demselben Metall bestehen müssen. Falls die beiden Metallabschnitte aus unterschiedlichen Metallen, d.h. aus drittem Metall bzw. aus viertem Metall bestehen, kann bereits vor dem Beginn des Diffusionsprozesses eine Spannungsdifferenz zwischen dem ersten Metallabschnitt und dem zweiten Metallabschnitt gemessen werden, welche auf den unterschiedlichen Kontaktspannungen an den beiden Grenzflächen beruht. Während des Diffusionsprozesses führt jedoch auch hier das Eindiffundieren des ersten Metalls in die Messschicht zu einer Änderung der Kontaktspannung an der entsprechenden Grenzfläche und damit der gemessenen Spannungsdifferenz, so dass auch mit einem derart ausgestalteten Thermoelement der Fortschritt des Diffusionsprozesses überwacht werden kann.

Das Erfassen des Fortschrittes des Diffusionsprozesses ermöglicht es, die Kontrolle bei der Prozessführung beispielsweise eines Wiederaufarbeitungsprozesses für Turbinenschaufeln zu verbessern. Die Messwerterfassung über die Spannungsdifferenz zwischen den beiden Metallabschnitten ist denkbar einfach. Insbesondere in Kombination mit einer Temperaturmessung während des Diffusionsprozesses kann so die Kontrolle des Diffusionsprozesses verbessert werden.

Das Eindringen vom ersten Metall in Bereiche der Messschicht, die außerhalb der Messzone liegen, kann in einer Weiterbildung der Erfindung dadurch verhindert werden, dass die Oberfläche der Messschicht außer im Bereich der Messzone mit einer Schutzschicht bedeckt ist.

In einer besonderen Ausgestaltung des erfindungsgemäßen Diffusionssensors ist die Messsicht als eine mit der bestimmten Schichtdicke auf eine erste Fläche eines flächigen Trägers aufgebrachte Schicht ausgebildet. Auf der der ersten Fläche des Trägers gegenüberliegenden zweiten Fläche sind eine erste Metallschicht aus einem dritten Metall und eine zweite Metallschicht aus dem dritten oder einem vierten Metall aufgebracht. Die Metallschichten können entweder als ausgedehnte Flächen oder vorzugsweise als Leiterbahnen ausgebildet sein. Außerdem umfasst der Diffusionssensor in dieser Ausgestaltung mindestens zwei mit einer Metallfüllung aus drittem oder viertem Metall gefüllte Durchgangsöffnungen in dem Träger. Mindestens eine Durchgangsöffnung mit einer Metallfüllung aus drittem Metall ist im Bereich der Messzone und mindestens eine Durchgangsöffnung mit einer Metallfüllung aus drittem oder viertem Metall ist im Bereich der Referenzzone angeordnet, wobei die Metallfüllungen jeweils eine Grenzfläche zur Messsicht aufweisen. Mindestens die Metallfüllung einer im Bereich der Messzone gelegenen Durchgangsöffnung ist mit der ersten Metallschicht verbunden und bildet zusammen mit dieser den ersten Metallabschnitt. Außerdem ist mindestens die Metallfüllung einer im Bereich der Referenzzone gelegenen Durchgangsöffnung mit der zweiten Metallschicht verbunden und bildet zusammen mit dieser den zweiten Metallabschnitt. Die Metallfüllung der im Bereich der Referenzzone gelegenen Durchgangsöffnung, welche zusammen mit der zweiten Metallschicht den zweiten Metallabschnitt bildet, ist dabei aus demselben Metall wie der zweite Metallabschnitt besteht. Des Weiteren sind in dieser Ausgestaltung des Diffusionssensors die Grenzflächen zwischen der Messschicht und den Metallabschnitten durch die Grenzflächen zwischen der Messschicht und den Metallfüllungen der entsprechenden Durchgangsöffnungen gebildet. Die Messsicht ist in dieser Ausgestaltung von einer Schutzschicht bedeckt, wobei die Messzone durch ein Fenster in der Schutzschicht definiert ist. Optional können auch die erste und die zweite Metallschicht von einer Schutzschicht bedeckt sein.

Die beschriebene Ausgestaltung des erfindungsgemäßen Diffusionssensors ermöglicht insbesondere das Herstellen hochintegrierter metallkeramischer Diffusionssensoren. Zu diesem Zweck kann der flächige Träger und/oder mindestens eine Schutzschicht aus einer Keramik - vorzugsweise einer hochtemperaturfesten Keramik - hergestellt sein.

Der Schichtaufbau des Diffusionssensors erlaubt insbesondere das Herstellen hochintegrierter Diffusionssensoren mittels Mehrlagenintegration. Die prozesstechnische Vielfalt der Mehrlagenintegration ermöglicht bspw. das Herstellen der Metallschichten mittels Siebdruck, wobei eine große Vielzahl von siebdruckfähigen Metallpasten Verwendung finden können. Beispielhaft aber nicht abschließend seien an dieser Stelle Pasten aus Platin (Pt), Silber(Ag)-Blei(Pb)-Verbindungen, Molybdän (Mo), Nickel(Ni)-Basislegierungen, etc. genannt. Daneben erlaubt die Mehrlagenintegration das Herstellen von Diffusionssensoren mit dem Schichtaufbau der beschriebenen Ausgestaltung in einer komplexen Formenvielfalt, bspw. in planaren oder in gewellten Strukturen. Durch Auswählen geeigneter Strukturen können so die Prozessbedingungen realer Werkstücke, bspw. einer realen Turbinenschaufel, nachgebildet werden.

Das erfindungsgemäße Verfahren zum Herstellen eines Diffusionssensors, der insbesondere ein Diffusionssensor mit Schichtaufbau gemäß der beschriebenen Ausgestaltung sein kann, umfasst die Schritte:
- Bereitstellen eines flächigen Trägers mit definierten Durchgangsöffnungen, sog. VIAs;
- Aufdrucken einer Messschicht auf eine Seite des flächigen Trägers unter Verwendung einer Metallpaste;
- Aufdrucken einer ersten Metallschicht und einer zweiten Metallschicht auf die zweite Seite des flächigen Trägers unter Verwendung mindestens einer Metallpaste eines anderen Metalls als des zum Aufdrucken der Messschicht verwendeten Metalls; und
- Füllen der Durchgangsöffnungen mit dem Metall der Messschicht oder dem Metall ersten bzw. zweiten Metallschicht. Insbesondere kann das Füllen der Durchgangsöffnungen unter Verwendung der jeweiligen Metallpaste zusammen mit dem Aufdrucken der ersten und der zweiten Metallschicht oder zusammen mit dem Aufdrucken der Messschicht erfolgen.

Das Aufdrucken der Messschicht und der Metallschichten mittels Metallpasten ermöglicht das Herstellen einer Vielzahl von Metallstrukturen, beispielsweise von metallischen Leiterbahnen oder von Metallflächen. Außerdem stehen, wie bereits erwähnt, eine Vielzahl von Metallpasten zum Bedrucken zur Verfügung. Das Aufdrucken der Metallpasten ermöglicht insbesondere das Herstellen kleinster Diffusionssensoren mit geometrischen Abmessungen, die kleiner sind als 1 mm x 1 mm x 1 mm.

Als flächiger Träger eignet sich insbesondere eine ungesinterte Keramik, in welche die Durchgangsöffnungen eingestanzt werden können und die nach dem Aufdrucken der Metallschichten und der Messschicht und nach dem Füllen der Durchgangsöffnungen gesintert wird. Die ungesinterte Keramik befindet sich dabei im Grünzustand, d.h. sie weist aufgrund eines teilvernetzten organischen Bindemittels bereits eine gewisse Formstabilität auf, besitzt gleichzeitig aber noch eine ausreichende Flexibilität, um Verformungen des Trägers zu ermöglichen.

In einer Weiterbildung des erfindungsgemäßen Verfahrens wird eine ungesinterte und mit einem Fenster zum Definieren der Messzone versehene keramische Schutzschicht über die Messschicht aufgebracht. Optional kann auch über die Metallschichten eine ungesinterte keramische Schutzschicht aufgebracht werden. Nach dem Aufbringen dieser Schutzschicht(en) erfolgt dann das Sintern. Mit diesem Verfahren lassen sich hochintegrierte hochtemperatur- und korrosionsbeständige Diffusionssensoren erzeugen, da empfindliche Bereiche von den gesinterten Keramikschichten geschützt werden.

Das erfindungsgemäße Verfahren ermöglicht ein kostengünstiges Herstellen erfindungsgemäßer Diffusionssensoren, so dass Einwegsensoren möglich sind, welche insbesondere wegen des Aufdruckens der relevanten Schichten gut reproduzierbar hergestellt werden können.

Das erfindungsgemäße Verfahren zum Überwachen des Fortschrittes der Diffusion eines ersten Metalls in ein zweites Metall umfasst die Schritte:
- Bereitstellen eines Thermoelementes mit einer ersten Grenzfläche, an der zweites Metall mit einem dritten Metall in Kontakt steht, und einer zweiten Grenzfläche, an der das zweite Metall mit drittem Metall oder viertem Metall in Kontakt steht;
- Anordnen des Thermoelementes derart, dass während des Durchführens des Diffusionsprozesses das erste Metall im Bereich der einen Grenzfläche in das zweite Metall in Richtung auf die Grenzfläche eindiffundieren kann und das zweite Metall im Bereich der anderen Grenzfläche gegen ein Eindiffundieren des ersten Metalls geschützt ist (was bspw. dadurch erreicht werden kann, dass das Thermoelement in einem abgedichteten Gehäuse mit einem Fenster im Bereich der Grenzfläche angeordnet ist); und
- Messen der Spannungsdifferenz am Thermoelement während des Diffusionsprozesses.

Das erfindungsgemäße Verfahren zum Überwachen des Fortschrittes der Diffusion eines ersten Metalls in ein zweites Metall, das bspw. unter Verwendung eines erfindungsgemäßen Diffusionssensors durchgeführt werden kann, eignet sich insbesondere zur Verwendung in einem Wiederaufarbeitungsverfahren (Refurbishment) für Turbinenbauteile wie etwa beschichtete Turbinenschaufeln.

Wie bereits weiter oben beschrieben worden ist, ermöglicht das Messen der Spannungsdifferenz das Überwachen des Fortschrittes des Diffusionsvorganges. Das erfindungsgemäße Verfahren zum Überwachen des Fortschrittes der Diffusion ermöglicht bei einfacher Messwerterfassung, nämlich der Erfassung einer Spannungsdifferenz, und einer einfachen Auswertung das Online-Überwachen eines Beschichtung- bzw. Diffusionsprozesses.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Fig. 1 zeigt ein Ausführungsbeispiel für den erfindungsgemäßen Diffusionssensor in einer schematischen Ansicht.
Fig. 2 zeigt eine Prinzipskizze des erfindungsgemäßen Diffusionssensors, anhand derer die Funktionsweise des Sensors erläutert wird.
Fig. 3 zeigt den Verlauf einer am Diffusionssensor aus Fig. 2 gemessenen Spannungsdifferenz während des Diffusionsprozesses.
Fign. 4a bis 4c zeigen verschiedene Stadien der Herstellung des Diffusionssensors aus Fig. 1.
Fig. 5 zeigt beispielhaft eine Gasturbine in einem Längsteilschnitt.
Fig. 6 zeigt in perspektivischer Ansicht eine Laufschaufel oder Leitschaufel einer Strömungsmaschine.
Fig. 7 zeigt eine Brennkammer einer Gasturbine

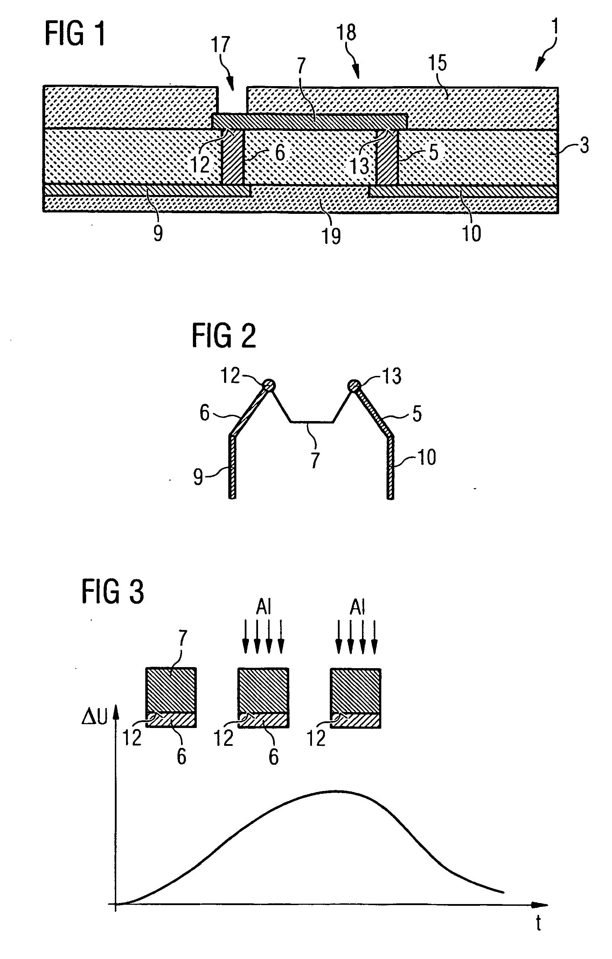

Ein Ausführungsbeispiel für den erfindungsgemäßen Diffusionssensor ist in Figur 1 dargestellt. Der im Folgenden beschriebene Diffusionssensor kann beispielsweise in einem Wiederaufarbeitungsverfahren (Refurbishment) für Turbinenschaufeln Verwendung finden und wird nachfolgenden im Zusammenhang mit einem derartigen Prozess beschrieben. Es folgt daher eine kurze Einführung in den Wiederaufbereitungsprozess von Turbinenschaufeln.

Turbinenschaufeln sind in der Regel mit einer keramischen Wärmeschutzschicht, einer sog. TBC-Schicht (englisch: Thermal Barrier Coating) geschützt. Zwischen der Wärmeschutzschicht und der Basislegierung, bspw. einer hochtemperaturbeständigen Nickel-Superlegierung, wie sie für die Herstellung von Turbinenschaufeln bekannt ist, befindet sich eine Haftvermittlerschicht, die häufig als MCrAlY-Schicht ausgeführt ist. Unter einer MCrAlY-Schicht soll im Rahmen der vorliegenden Beschreibung eine Schicht aus einer metallischen Legierung zu verstehen sein, die Chrom (Cr) und Aluminium (A1) umfasst und in der Y für Yttrium oder ein anderes Element der seltenen Erden und M für ein weiteres Metall wie etwa Eisen (Fe), Kobalt (Co) oder Nickel (Ni) stehen.

Im Wiederaufarbeitungsprozess wird sowohl die Haftvermittlerschicht als auch die keramische Wärmeschutzschicht flächig abgetragen. Zum Abtragen der MCrAlY-Haftvermittlerschicht wird die Schaufel beispielsweise bei 1000° C mit Aluminium aus der Gasphase penetriert, wobei das Aluminium eine Diffusionszone von ca. 300 µm ausbildet. Anschließend wird die so behandelte Turbinenschaufel in ein Säurebad gegeben, welches die mit Aluminium angereicherte MCrAlY-Haftvermittlerschicht auflöst. Abschließend wird das Bauteil gereinigt und erneut beschichtet.

Während des Eindiffundierens des Aluminiums in die MCrAlY-Schicht ist der temperatur- und zeitabhängige Diffusionsprozess so zu steuern, dass kein Aluminium in die unter der MCrAlY-Schicht gelegene Nickel-Basislegierung eindiffundiert. Ein Eindiffundieren von Aluminium in die Nickel-Basislegierung kann beim nachfolgenden Ätzschritt zu einer Beeinträchtigung der Basislegierung führen und die Maßhaltigkeit und damit die Betriebssicherheit bzw. die konstruktive Lebensdauer der Turbinenschaufel drastisch verringern. Der Diffusionsprozess wird daher unter Verwendung des erfindungsgemäßen Verfahrens zum Überwachen des Fortschrittes der Diffusion mit einem erfindungsgemäßen Diffusionssensor gesteuert.

Ein erfindungsgemäßer Diffusionssensor 1 ist schematisch in Figur 1 dargestellt. Er umfasst eine Zirkonoxid-Keramik-Folie 3 (ZrO₂-Keramik) welche den Träger oder das Substrat des Sensors bildet. In der Zirkonoxid-Keramik-Folie 3 sind Durchgangsöffnungen 5, 6, sog. VIAs vorhanden, welche mit Platin (Pt) gefüllt sind. Auf eine Seite des der Zirkonoxid-Keramik-Folie 3 ist eine MCrAlY-Schicht 7 mit einer Dicke im Bereich von ca. 10 bis 15 µm aufgebracht, welche als Messschicht des Diffusionssensors 1 dient. Die MCrAlY-Schicht 7 erstreckt sich dabei zumindest über die beiden VIAs 5, 6. Auf der gegenüberliegenden Seite der Zirkonoxid-Keramik-Folie 3 sind Leiterbahnen 9 und 10 aus Platin aufgebracht. Die Leiterbahnen 9, 10 stehen mit den Platinfüllungen der VIAs 5, 6 in elektrischem Kontakt. Die Platinfüllungen der VIAs 5, 6 weisen Kontaktflächen 12, 13 auf, über welche sie mit dem MCrAlY der Messschicht 7 in Verbindung stehen. Die MCrAlY-Schicht 7 ist von einer hochtemperaturbeständigen Keramikschicht 15 bedeckt, welche im Bereich des VIAs 6 ein Fenster 17 aufweist. Durch das Fenster 17 kann während des Diffusionsprozesses Aluminium in das MCrAlY-Schicht 7 eindringen und durch diese Schicht diffundieren. Das Fenster 17 definiert daher die Messzone des Diffusionssensors 1. Die übrigen Bereiche der MCrAlY-Schicht 7 stellen dagegen die Referenzzone 18 des Diffusionssensors 1 dar. Die Begriffe Messzone und Referenzzone 18 werden später mit Bezug auf Figur 2 näher erläutert werden.

Ebenso wie der größte Teil der MCrAlY-Schicht 7 sind auch die Leiterbahnen 9, 10 von einer hochtemperaturbeständigen Keramikschicht 19 bedeckt. Die hochtemperaturbeständigen Keramikschichten 15 und 19 führen zu einer weitgehend hermetischen Abdichtung der MCrAlY-Schicht 7, der Platinfüllungen der VIAs 5, 6 sowie der Leiterbahnen 9, 10.

Der beschriebene Diffusionssensor 1 kann aufgrund seiner Struktur hochintegriert ausgeführt werden und ist wegen der schützenden Keramikschichten 15, 19 hochtemperatur- und korrosionsfest.

Die Funktionsweise des erfindungsgemäßen Diffusionssensors 1 und die sich daraus ergebende Möglichkeit des Überwachens des Diffusionsprozesses wird nachfolgend mit Bezug auf Figur 2 näher erläutert. Figur 2 stellt stark schematisiert die Platinleiterbahnen 9, 10, die Platinfüllungen der VIAs 5, 6, die Grenzflächen 12, 13 sowie die MCrAlY-Messschicht 7 dar.

An den Grenzflächen stehen das Platin der VIAs 5, 6 und das MCrAlY der Messschicht 7 miteinander in Kontakt. Aufgrund der unterschiedlichen elektronischen Eigenschaften von Platin und MCrAlY entstehen an den Grenzflächen 12, 13 Kontaktspannungen. Die beiden Kontaktspannungen weisen - soweit die beiden Grenzflächen dieselbe Temperatur aufweisen - denselben Betrag auf. Da beim Übergang von der Leiterbahn 9 zur Leiterbahn 10 an der Grenzfläche 12 jedoch ein Übergang von Platin zu MCrAlY und an der Grenzfläche 13 ein Übergang von MCrAlY zu Platin stattfindet, sind die Vorzeichen der beiden Kontaktspannungen unterschiedlich. In der Summe heben sich daher die Kontaktspannungen auf, so dass sich für die Spannungsdifferenz zwischen den Leiterbahnen 9 und 10 im Wesentlichen der Wert Null ergibt.

In der Standardanwendung eines Thermoelementes wird nun die Temperaturabhängigkeit des Betrages der Kontaktspannung ausgenutzt, um eine Temperatur zu messen. Dazu wird in der Regel eine der Kontaktflächen auf einer bestimmten Temperatur gehalten, während die andere Kontaktfläche auf die zu messende Temperatur gebracht wird. Aufgrund der dann unterschiedlichen Beträge der Kontaktspannung heben sich die Kontaktspannungen in der Summe nicht mehr auf, so dass eine Spannungsdifferenz ungleich Null an den Leiterbahnen 9, 10 gemessen werden kann.

Außer von der Temperatur hängt die Kontaktspannung jedoch auch von der Materialzusammensetzung im Bereich der Grenzflächen 12, 13 ab. Diese Abhängigkeit macht sich das erfindungsgemäße Verfahren zum Überwachen des Fortschritts der Diffusion eines ersten Metalls in ein zweites Metall zu Nutze. Wenn beispielsweise während eines Wiederaufarbeitungsprozesses für Turbinenschaufeln die MCrAlY-Beschichtung mit Aluminium penetriert wird, ist der Diffusionssensor so in der Nähe der Turbinenschaufel angebracht, dass auch die Messschicht 7 durch das Fenster 17 hindurch mit Aluminium penetriert wird. Das in das MCrAlY der Messschicht 7 eingedrungene Aluminium diffundiert dann in Richtung auf die Grenzfläche 12 und ändert dabei die Zusammensetzung der Messschicht 7 in der Messzone. Die Zusammensetzung der Messschicht 7 in der Referenzzone 18, also im Bereich außerhalb des Fensters 17, bleibt hingegen zunächst unverändert. Aufgrund der Änderung der Materialzusammensetzung im Bereich der Kontaktfläche 12 ändert sich daher die dort auftretende Kontaktspannung, während die Kontaktspannung im Bereich der Grenzfläche 13 unverändert bleibt. Die Änderung der Kontaktspannung an der Grenzfläche 12 führt dazu, dass im Verlauf des Diffusionsprozesses eine Spannungsdifferenz ungleich Null zwischen den beiden Leiterbahnen 9, 10 gemessen werden kann, die Informationen über den Fortschritt der Diffusionsprozesses enthält.

Der Verlauf der zwischen den Leiterbahnen 9 und 10 zu messenden Spannungsdifferenz ist schematisch in Figur 3 dargestellt. Vor Beginn des Diffusionsprozesses ist die zwischen den Leiterbahnen 9, 10 zü messende Spannungsdifferenz Null, da an beiden Grenzflächen 12, 13 dieselbe Materialzusammensetzung vorliegt. Während des Diffusionsprozesses diffundiert dann Aluminium in den Bereich der Grenzfläche 12, so dass die Aluminiumkonzentration an dieser Grenzfläche 12 zunimmt. In dieser Phase des Diffusionsprozesses wird eine zunehmende Spannungsdifferenz zwischen den Leiterbahnen 9 und 10 gemessen. Sobald die Aluminiumkonzentration im Bereich der Grenzfläche 12 einen maximalen Wert erreicht hat, verringert sich die Spannungsdifferenz wieder, da einerseits zunehmend Aluminium in das Platin des VIAs 6 diffundiert und andererseits auch eine laterale Diffusion des Aluminiums durch die Messschicht 7 auftritt, welche dazu führt, dass mit Fortdauer des Prozesses auch im Bereich der Grenzfläche 13 die Aluminiumkonzentration steigt. Beide Effekte führen dazu, dass sich die Beträge der Kontaktspannungen einander wieder angleichen.

Der gemessene Spannungsverlauf des erfindungsgemäßen Diffusionssensors 1 wird außer von der Materialzusammensetzung im Bereich der Grenzflächen 12, 13 auch von der Temperaturdifferenz zwischen den beiden Grenzflächen 12, 13 bestimmt. Die Temperaturdifferenz tritt dabei auf, weil die Messschicht 7 im Bereich des Fensters direkt der hohen Temperatur (≥ 1000° C) ausgesetzt ist, während die Grenzfläche 13 durch die keramische Schutzschicht 15 geschützt ist. Mittels geeigneter Auswerteverfahren lässt sich aus dem Verlauf der in Figur 3 dargestellten Kurve der Fortschritt des Diffusionsprozesses ermitteln. Die Spannungsdifferenz ist dabei durch ein externes Voltmeter in einfacher Weise zu erfassen. Mit Kenntnis der Diffusionsgeschwindigkeit und der definierten Schichtdicke der Messschicht 7 ist der Diffusionsprozess anhand der gemessenen Spannungsdifferenz kontrolliert steuerbar. Zusätzlich erlaubt das integrierte Mehrlagenkonzept des erfindungsgemäßen Sensors das Einbringen weiterer Sensoren, beispielsweise von Temperatursensoren, um sowohl die Temperatur als auch das Diffusionsprofil simultan zu erfassen.

Ferner ist auch der Einsatz mehrerer erfindungsgemäßer Diffusionssensoren in einem Reaktor zum Penetrieren der MCrAlY-Schicht einer Turbinenschaufel möglich. Dadurch können z.B. Schwankungen in der Gaszusammensetzung und ortsabhängige Temperaturunterschiede frühzeitig detektiert werden.

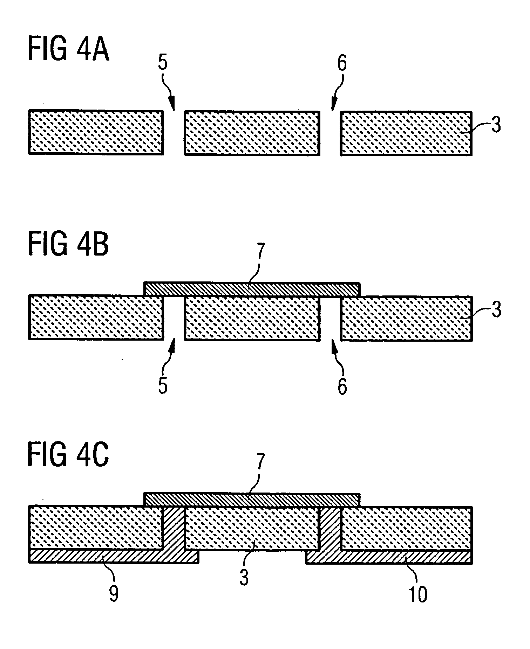

Die Herstellung des erfindungsgemäßen Diffusionssensors ist schematisch in den Figuren 4a bis 4c dargestellt. Die Figuren zeigen verschiedene Verfahrensschritte des Herstellungsverfahrens.

Zu Beginn des Verfahrens werden die VIAs 5, 6 in eine Keramikfolie 3 im Grünzustand eingestanzt, um den flächigen Träger des Sensors herzustellen (Fig. 4a). Unter einer Keramik im Grünzustand soll hierbei eine ungesinterte Polymerkeramik zu verstehen sein, welche aufgrund einer teilweisen Vernetzung eines polymeren Bindemittels bereits eine gewissen Formstabilität aufweist und gleichzeitig auch eine gewisse Flexibilität besitzt, so dass beispielsweise Folien erzeugt werden können.

Nach dem Stanzen der VIAs 5, 6 in die Keramikfolie 3 wird die Messschicht 7 mittels einer Metallpaste, die im vorliegenden Beispiel eine MCrAlY-Paste ist, auf die Keramikfolie 3 aufgedruckt. Das Aufdrucken erfolgt dabei so, dass sich die Messschicht 7 sowohl über das VIA 5 als auch über das VIA 6 erstreckt (Figur 4b). Zwar findet im vorliegenden Ausführungsbeispiel eine MCrAlY-Paste Verwendung, jedoch kann auch eine andere Paste Verwendung finden. Vorzugsweise findet jedoch eine Metallpaste Verwendung, deren Zusammensetzung an die Zusammensetzung der Schicht, in welcher der zu überwachende Diffusionsprozess stattfindet, angepasst ist. Insbesondere können die Zusammensetzung der Metallpaste und die Zusammensetzung der Schicht, in welcher der zu überwachende Diffusionsprozess stattfindet, identisch sein.

Nachdem die Messschicht 7 aufgedruckt worden ist, werden die Leiterbahnen 9, 10 auf die gegenüberliegende Seite der Keramikfolie 3 aufgedruckt (Fig. 4c). Mit der dabei verwendeten Metallpaste, die im vorliegenden Ausführungsbeispiel eine Platinpaste ist, werden gleichzeitig die VIAs 5, 6 gefüllt. Im vorliegenden Ausführungsbeispiel werden beide Leiterbahnen 5, 6 mit derselben Metallpaste hergestellt. Es ist jedoch auch möglich, die Leiterbahnen 9, 10 mit verschiedenen Metallpasten, d.h. mit Metallpasten verschiedener Zusammensetzung herzustellen. Dies hat zur Folge, dass selbst dann, wenn beide Grenzflächen 12, 13 vor Einsetzen des Diffusionsprozesses dieselbe Temperatur aufweisen, die Summe der beiden Kontaktspannungen nicht Null ist. Dennoch kann bei Eintreten des Diffusionsprozesses an einer der beiden Grenzflächen 12, 13 eine Variation in der zwischen den Leiterbahnen 9, 10 gemessenen Spannung festgestellt werden, aus der sich der Fortschritt des Diffusionsprozesses ermitteln lässt. Gegenüber der in Figur 3 dargestellten Kurve würde sich dabei im Wesentlichen ein Offset ergeben. Auch diese Ausgestaltung kann daher als Diffusionssensor Verwendung finden.

Im vorliegenden Ausführungsbeispiel wird die Messschicht 7 vor den Leiterbahnen 9, 10 auf den Träger 3 aufgedruckt. Alternativ ist es jedoch auch möglich, zuerst die Leiterbahnen 9, 10 aufzudrucken und erst danach die Messschicht 7 auf die gegenüberliegende Seite des Trägers 3 aufzudrucken. Das Füllen der VIAs 5, 6 kann entweder zusammen mit dem Aufdrucken der Leiterbahnen 9, 10 mit der Metallpaste der Leiterbahnen 9, 10 oder zusammen mit dem Aufdrucken der Messschicht 7 mit der Metallpaste der Messschicht 7 erfolgen.

Nachdem sowohl die Messschicht 7 als auch die Leiterbahnen 9, 10 aufgedruckt worden sind, werden Folien aus hochtemperaturfester und korrosionsfester Keramik im Grünzustand über die Messschicht 7 und die Leiterbahnen 9, 10 laminiert, und die gesamte Vorrichtung wird bei ca. 1100 bis 1300° C gesintert (Fig. 1). In einem letzten Verfahrensschritt werden Platinelektroden an die Leiterbahnen angelötet, die später beim Überwachen des Diffusionsprozesses bspw. an ein Voltmeter angeschlossen werden können.

Der erfindungsgemäße Sensor und das erfindungsgemäße Verfahren zum Überwachen des Fortschrittes der Diffusion eines ersten Metalls in ein zweites Metall ermöglichen ein gezieltes Verfolgen und Steuern des Abscheide- bzw. Diffusionsprozesses bei höchsten Temperaturen (d.h. bei Temperaturen ≥ ca. 1000° C) in stark korrosiven Atmosphären wie etwa in Metallgasatmosphären und/oder in einer säurehaltigen Umgebung.

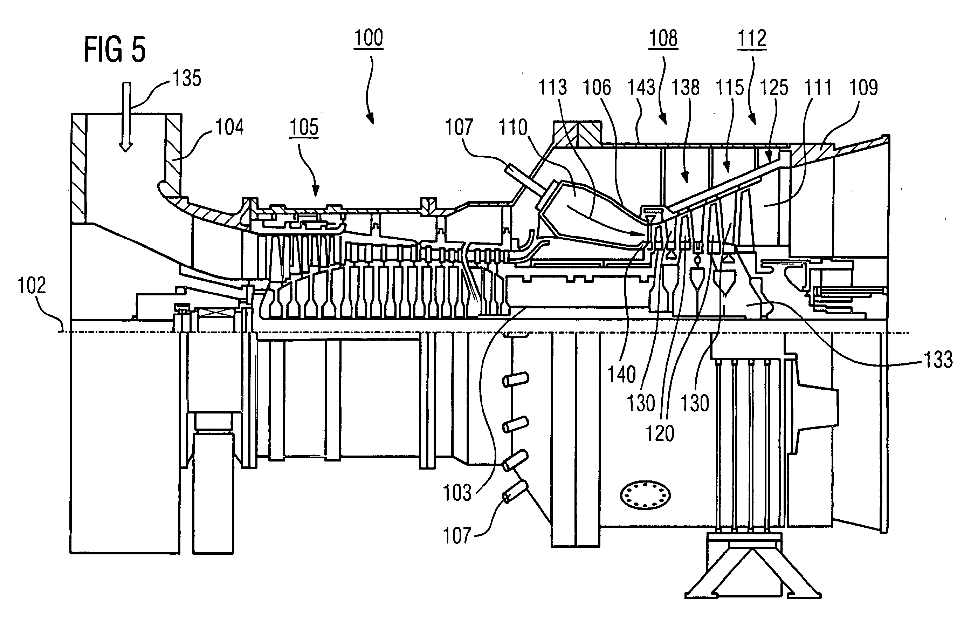

Die Figur 5 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

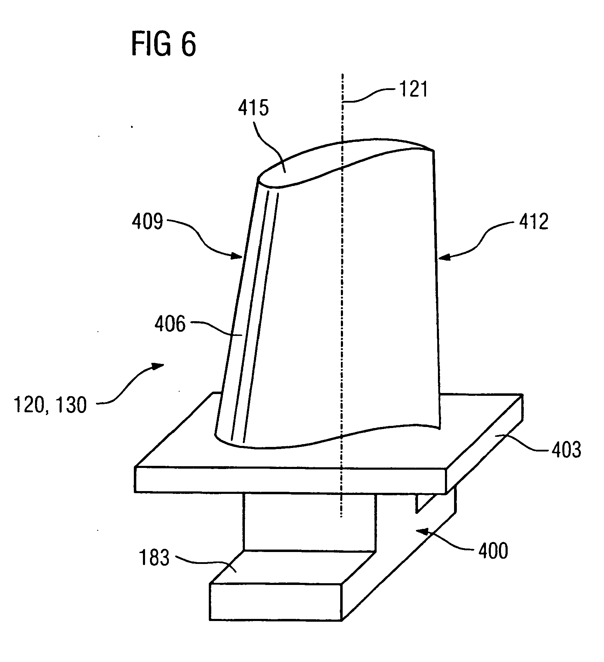

Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

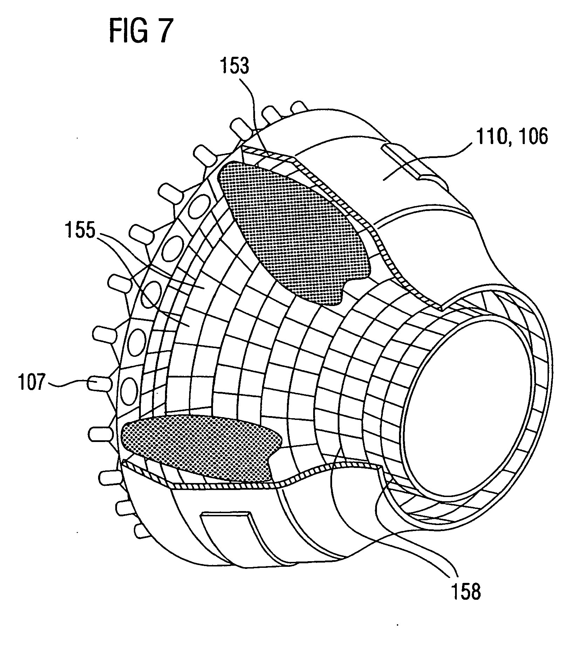

Die Figur 7 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Diffusionssensor zum Überwachen des Fortschrittes eines Diffusionsprozesses,
welcher einen flächigen Träger (3) mit definierten Durchgangsöffnungen (5, 6) aufweist,
in welchem ein erstes Metall in ein zweites Metall eindiffundiert, mit
- einer Messschicht (7) aus zweitem Metall;
- einer Messzone (17), die derart ausgestaltet ist, dass während des Diffusionsprozesses erstes Metall im Bereich der Messzone (17) in die Messschicht (7) eindiffundiert,
wobei die Messschicht (7) außer in dem Bereich der Messzone (17) von einer das Eindringen vom ersten Metall in die Messschicht (7) verhindernden Schutzschicht (15) bedeckt ist
- einer Referenzzone (18), die derart ausgestaltet ist, dass die Messschicht (7) während des Diffusionsprozesses im Bereich der Referenzzone (18) gegen ein Eindringen von erstem Metall geschützt ist;
- einem ersten Metallabschnitt (6, 9),
welcher aus einem dritten Metall besteht und
im Bereich der Messzone (17) eine Grenzfläche (12) mit der Messschicht (7) aufweist; und
- einem zweiten Metallabschnitt (5, 10),
welcher aus dem dritten oder einem vierten Metall besteht und im Bereich der Referenzzone (18) eine Grenzfläche (13) mit Messschicht aufweist.

2. Diffusionssensor nach Anspruch 1, in dem
- die Messschicht (7) als eine mit auf eine erste Fläche eines flächigen Trägers (3) aufgebrachte Schicht ausgebildet ist;
- eine erste Metallschicht (9) aus dem dritten Metall und eine zweite Metallschicht (10) aus dem dritten oder dem vierten Metall auf die der ersten Fläche gegenüberliegende zweite Fläche des Trägers (3) aufgebracht sind;
- mindestens zwei mit einer Metallfüllung aus drittem oder viertem Metall gefüllte Durchgangsöffnungen (5, 6) in dem Träger (3) vorhanden sind, wobei mindestens eine Durchgangsöffnung (6) mit einer Metallfüllung aus drittem Metall im Bereich der Messzone (17) und mindestens eine Durchgangsöffnung (5) mit einer Metallfüllung aus drittem oder viertem Metall im Bereich der Referenzzone (18) angeordnet ist und wobei die Metallfüllungen jeweils eine Grenzfläche (12, 13) zur Messschicht (7) aufweisen;
- mindestens die Metallfüllung einer im Bereich der Messzone (17) gelegenen Durchgangsöffnung (6) mit der ersten Metallschicht (9) verbunden ist und zusammen mit dieser den ersten Metallabschnitt bildet und mindestens die Metallfüllung einer im Bereich der Referenzzone (18) gelegenen Durchgangsöffnung (5) mit der zweiten Metallschicht (10) verbunden ist und zusammen mit dieser den zweiten Metallabschnitt bildet, wobei die Metallfüllung dieser im Bereich der Referenzzone (18) gelegen Durchgangsöffnung (5) aus demselben Metall wie der zweite Metallabschnitt (10) besteht;
- die Grenzflächen zwischen der Messschicht (7) und den Metallabschnitten durch die Grenzflächen (12, 13) zwischen der Messschicht (7) und den Metallfüllungen der entsprechenden Durchgangsöffnungen (5, 6) gebildet sind;
- die Messschicht (7) von einer Schutzschicht (15)bedeckt ist; und
- die Messzone durch ein Fenster (17) in der Schutzschicht (15) definiert ist.

3. Diffusionssensor nach Anspruch 2,
in dem die erste Metallschicht (9) und die zweite Metallschicht (10) von einer Schutzschicht (19) bedeckt sind.

4. Diffusionssensor nach Anspruch 2 oder 3,
in dem der flächige Träger (3) und/oder mindestens ein Schutzschicht (15, 19) eine Keramik umfasst bzw. umfassen.

5. Diffusionssensor nach Anspruch 4, **dadurch gekennzeichnet, dass** die Keramik eine hochtemperaturbeständige Keramik ist.

6. Verfahren zum Herstellen eines Diffusionssensors (1),
- Bereitstellen eines flächigen Trägers (3) mit definierten Durchgangsöffnungen (5, 6);
- Aufdrucken einer Messschicht (7) auf eine Seite des flächigen Trägers (3) unter Verwendung einer Metallpaste;
- Aufdrucken einer ersten Metallschicht (9) und einer zweiten Metallschicht (10) auf die zweite Seite des flächigen Trägers (3) unter Verwendung mindestens einer Metallpaste eines anderen Metalls als des zum Aufdrucken der Messschicht (7) verwendeten Metalls; und
- Füllen der Durchgangsöffnungen (5, 6) mit dem Metall der Messschicht (7) oder dem Metall der ersten bzw. zweiten Metallschicht (9, 10),
- Aufbringen einer ungesinterten keramischen Schutzschicht (15) über die Messschicht (7),
wodurch eine Referenzzone (18) gebildet wird,
wobei die Messschicht (7) außer im Bereich der Messzone (17) von einer das Eindringen vom ersten Metall in die Messschicht (7) verhindernden Schutzschicht (15) bedeckt wird und
wobei der Diffusorsensor (1) gesintert wird.

7. Verfahren nach Anspruch 6,
in dem das Füllen der Durchgangsöffnungen (5, 6) zusammen mit dem Aufdrucken der ersten Metallschicht (9) und der zweiten Metallschicht (10) oder zusammen mit dem Aufdrucken der Messschicht (7) mit der jeweiligen Metallpaste erfolgt.

8. Verfahren nach Anspruch 6 oder 7,
bei dem der flächige Träger (3) in Form einer ungesinterten Keramik bereitgestellt wird, in die die Durchgangsöffnungen (5, 6) eingestanzt werden und die nach dem Aufdrucken der Metallschichten (5, 6) und der Messschicht (7) und nach dem Füllen der Durchgangsöffnungen (5, 6) gesintert wird.

9. Verfahren nach Anspruch 8,
bei dem eine ungesinterte und mit einem Fenster (17) zum Definieren der Messzone versehene keramische Schutzschicht (15) über die Messschicht (7) aufgebracht wird und das Sintern nach dem Aufbringen der Schutzschicht erfolgt.

10. Verfahren nach Anspruch 8 oder 9,
bei dem eine ungesinterte keramische Schutzschicht (19) über die die Metallschichten (9, 10) aufgebracht wird und das Sintern nach dem Aufbringen der Schutzschicht (19) erfolgt.

11. Verfahren nach Anspruch 9 oder 10,
bei dem die Schutzschichten (15, 19) als Folien in Grünzustand aufgebracht werden.

12. Verfahren zum Überwachen des Fortschrittes der Diffusion eines ersten Metalls in ein zweites Metall während eines Diffusionsprozesses,
mit den Schritten:
- Bereitstellen eines Thermoelementes (5, 6, 7, 9, 10, 12, 13) mit einer ersten Grenzfläche (12), an der das zweites Metall mit einem dritten Metall in Kontakt steht, und einer zweiten Grenzfläche (13), an der das zweite Metall mit drittem Metall oder vierten Metall in Kontakt steht;
- Anordnen des Thermoelementes (5, 6, 7, 9, 10, 12, 13) derart, dass während des Durchführens des Diffusionsprozesses das erste Metall im Bereich der einen Grenzfläche (12) in das zweite Metall in Richtung auf die Grenzfläche (12) eindiffundieren kann und dass das zweite Metall im Bereich der anderen Grenzfläche (13) gegen ein Eindiffundieren des ersten Metalls geschützt ist;
- Messen der Spannungsdifferenz am Thermoelement (5, 6, 7, 9, 10, 12, 13) während des Diffusionsprozesses.

13. Verfahren nach Anspruch 6,
bei dem ein Diffusionssensor (1) nach einem der Ansprüche 3 - 5 hergestellt wird.

14. Verfahren nach Anspruch 12,
bei dem ein Diffusionssensor (1) nach einem der Ansprüche 1 - 5 verwendet wird.

15. Wiederaufarbeitungsverfahren für Turbinenbauteile,
in welchem das Verfahren nach Anspruch 12 zum Überwachen des Fortschrittes eines Diffusionsprozesses zur Anwendung kommt.

16. Wiederaufarbeitungsverfahren für Turbinenbauteile nach Anspruch 15,
das für Turbinenschaufeln zur Anwendung kommt.

## Claims

1. Diffusion sensor for monitoring the progress of a diffusion process
which has a planar carrier (3) with defined passage openings (5, 6),
in which a first metal indiffuses into a second metal, comprising
- a measurement layer (7) composed of second metal;
- a measurement zone (17), which is configured in such a way that during the diffusion process, first metal indiffuses into the measurement layer (7) in the region of the measurement zone (17),
- the measurement layer (7) being covered, apart from in the region of the measurement zone (17) by a protection layer (15) preventing the penetration of the first metal into the measurement layer (7),
- a reference zone (18) which is configured in such a way that the measurement layer (7) is protected against a penetration of first metal during the diffusion process in the region of the reference zone (18);
- a first metal section (6, 9) which comprises a third metal and has an interface (12) with a measurement layer (7) in the region of the measurement zone (17); and
- a second metal section (5, 10), which comprises the third or a fourth metal and has an interface (13) with the measurement layer in the region of the reference zone (18).

2. Diffusion sensor, according to Claim 1,
in which
- the measurement layer (7) is formed as a layer concomitantly applied to a first area of a planar carrier (3);
- a first metal layer (9) composed of the third metal and of second metal layer (10) composed of the third or the fourth metal are applied to the second area of the carrier (3) opposite the first area;
- at least two passage openings (5, 6) filled with a metal filling composed of third or fourth metal are present in the carrier (3), at least one passage opening (6) with a metal filling composed of third metal being arranged in the measurement zone (17) and at least one passage opening (5) with a metal filling composed of third or fourth metal being arranged in the region of the reference zone (18), and the metal fillings in each case having an interface (12, 13) with the measurement layer (7);
- at least the metal filling of a passage opening (6) located in the region of the measurement zone (17) is connected to the first metal layer (9) and together with the latter forms the first metal section, and at least the metal filling of a passage opening (5) located in the region of the reference zone (18) is connected to the second metal layer (10) and together with the latter forms the second metal section, the metal filling of said passage opening (5) located in the region of the reference zone (18) comprising the same metal as the second metal section (10);
- the interfaces between the measurement layer (7) and the metal sections are formed by the interfaces (12, 13) between the measurement layer and the metal fillings of the corresponding passage openings (5, 6);
- the measurement layer (7) is covered by a protection layer (15); and
- the measurement zone is defined by a window (17) in the protection layer (15).

3. Diffusion sensor according to Claim 2,
in which the first metal layer (9) and the second metal layer (10) are covered by a protection layer (19).

4. Diffusion sensor according to Claim 2 or 3,
in which the planar carrier (3) and/or at least one protection layer (15, 19) comprises a ceramic.

5. Diffusion sensor according to Claim 4, **characterized in that** the ceramic is a high-temperature-resistant ceramic.

6. Method for producing a diffusion sensor (1),
- providing a planar carrier (3) with defined passage openings (5, 6);
- printing a measurement layer (7) on to one side of the planar carrier (3) using a metal paste;
- printing a first metal layer (9) and a second metal layer (10) on to the second side of the planar carrier (3) using at least one metal paste of a metal other than the metal used for printing on the measurement layer (7); and
- filling the passage openings (5, 6) with the metal of the measurement layer (7) or the metal of the first or second metal layer (9, 10),
- applying an unsintered ceramic protection layer (15) over the measurement layer (7), whereby a reference zone (18) is formed, the measurement layer (7) being covered, apart from in the region of the measurement zone (17) by a protection layer (15) preventing the penetration of the first metal into the measurement layer (7), and the diffusion sensor (1) being sintered.

7. Method according to Claim 6,
in which filling the passage openings (5, 6) is effected together with printing on the first metal layer (9) and the second metal layer (10) together with printing on the measurement layer (7) using the respective metal paste.

8. Method according to Claim 6 or 7,
in which the planar carrier (3) is provided in the form of an unsintered ceramic into which the passage openings (5, 6) are stamped and which is sintered after printing on the metal layers (5, 6) and the measurement layer (7) and after filling the passage openings (5, 6).

9. Method according to Claim 8
in which an unsintered ceramic protection layer (15) provided with a window (17) for defining the measurement zone is applied over the measurement layer (7) and sintering is effected after applying the protection layer.

10. Method according to Claim 8 or 9,
in which an unsintered ceramic protection layer (19) is applied over the metal layers (9, 10) and sintering is effected after applying the protection layer (19).

11. Method according to Claim 9 or 10,
in which the protection layers (15, 19) are applied as sheets in the green state.

12. Method for monitoring the progress of the diffusion of a first metal into a second metal during a diffusion process, comprising the steps of:
- providing a thermoelement (5, 6, 7, 9, 10, 12, 13) having a first interface (12), at which the second metal is in contact with the third metal, and a second interface (13), at which the second metal is in contact with third metal or fourth metal;
- arranging the thermoelement (5, 6, 7, 9, 10, 12, 13) in such a way that in the course of carrying out the diffusion process, the first metal in the region of one interface (12) can indiffuse into the second metal in the direction of the interface (12), and that the second metal in the region of the other interface (13) is protected against an indiffusion of the first metal;
- measuring the voltage difference at the thermoelement (5, 6, 7, 9, 10, 12, 13) during the diffusion process.

13. Method according to Claim 6,
in which a diffusion sensor (1) according to one of Claims 3 - 5 is produced.

14. Method according to Claim 12,
in which a diffusion sensor (1) according to one of Claims 1 - 5 is used.

15. Refurbishment method for turbine components,
which applies the method according to Claim 12 for monitoring the progress of a diffusion process.

16. Refurbishment method for turbine components according to Claim 15,
which is applied for turbine blades or vanes.

## Revendications

1. Capteur de diffusion pour contrôler la progression d'un processus de diffusion,
lequel comporte un support plat (3) ayant des ouvertures de passage (5, 6) définies,
dans lequel un premier métal diffuse dans un deuxième métal, et comportant
- une couche de mesure (7) en le deuxième métal,
- une zone de mesure (17) conçue de telle manière que pendant le processus de diffusion le premier métal diffuse dans la couche de mesure (7) dans la région de la zone de mesure (17),
en dehors de la région de la zone de mesure (17) la couche de mesure (7) étant recouverte par une couche protectrice (15) qui empêche le premier métal de pénétrer dans la couche de mesure (7),
- une zone de référence (18) conçue de telle manière que, dans la région de la zone de référence (18), la couche de mesure (7) est protégée de la pénétration par le premier métal pendant le processus de diffusion,
- une première portion métallique (6, 9)
constituée d'un troisième métal et
munie d'une interface (12) avec la zone de mesure (7) dans la région de la zone de mesure (17), et
- une deuxième portion métallique (5, 10)
constituée du troisième métal ou d'un quatrième métal et munie d'une interface (13) avec la couche de mesure dans la région de la zone de référence (18).

2. Capteur de diffusion selon la revendication 1, dans lequel
- la couche de mesure (7) est une couche appliquée sur une première surface d'un support plat (3),
- une première portion métallique (9) constituée du troisième métal et une deuxième portion métallique (10) constituée du troisième ou du quatrième métal sont appliquées sur la deuxième surface du support (3), celle située en face de la première surface,
- au moins deux ouvertures de passage (5, 6) remplies d'un remplissage métallique constitué du troisième ou du quatrième métal se trouvent dans le support (3), au moins une ouverture de passage (6) comportant un remplissage métallique constitué du troisième métal est dans la région de la zone de mesure (17) et au moins une ouverture de passage (5) comportant un remplissage métallique constitué du troisième ou du quatrième métal est dans la région de la zone de référence (18) et chacun des remplissages métalliques a une interface (12, 13) vers la couche de mesure (7),
- au moins le remplissage métallique d'une ouverture de passage (6) située dans la région de la zone de mesure (17) est relié à la première couche métallique (9) et forme conjointement avec elle la première portion métallique et au moins le remplissage métallique d'une ouverture de passage (5) située dans la région de la zone de référence (18) est relié à la deuxième couche métallique (10) et forme conjointement avec celle-ci la deuxième portion métallique, le remplissage métallique de cette ouverture de passage (5) située dans la région de la zone de référence (18) étant constitué du même métal que la deuxième portion métallique (10),
- les interfaces entre la couche de mesure (7) et les portions métalliques sont formées par les interfaces (12, 13) entre la couche de mesure (7) et les remplissages métalliques des ouvertures de passage (5, 6) correspondantes,
- la couche de mesure (7) est recouverte par une couche protectrice (15) et
- la zone de mesure est définie par une fenêtre (17) dans la couche protectrice (15).

3. Capteur de diffusion selon la revendication 2, dans lequel la première couche métallique (9) et la deuxième couche métallique (10) sont recouvertes par une couche protectrice (19).

4. Capteur de diffusion selon la revendication 2 ou 3, dans lequel le support plat (3) et/ou au moins une couche protectrice (15, 19) comprend ou comprennent une céramique.

5. Capteur de diffusion selon la revendication 4, **caractérisé en ce que** la céramique est une céramique qui résiste aux hautes températures.

6. Procédé pour fabriquer un capteur de diffusion (1)
- fournir un support plat (3) ayant des ouvertures de passage (5, 6) définies,
- appliquer avec pression une couche de mesure (7) sur un côté du support plat (3) en utilisant une pâte métallique,
- appliquer avec pression une première couche métallique (9) et une deuxième couche métallique (10) sur le deuxième côté du support plat (3) en utilisant au moins une pâte métallique en un autre métal que celui utilisé pour appliquer la couche de mesure (7) et
- remplir les ouvertures de passage (5, 6) par le métal de la couche de mesure (7) ou par le métal de la première ou de la deuxième couche métallique (9, 10),
- appliquer sur la couche de mesure (7) une couche protectrice (15) céramique non frittée,
ce qui forme une zone de référence (18),
la couche de mesure (7) en dehors de la région de la zone de mesure (17) étant recouverte par une couche protectrice (15) qui empêche que le premier métal ne pénètre dans la couche de mesure (7) et
le capteur de diffusion (1) étant fritté.

7. Procédé selon la revendication 6, d'après lequel les ouvertures de passage (5, 6) sont remplies en même temps que la première couche métallique (9) et la deuxième couche métallique (10) sont appliquées ou en même temps que la pâte métallique correspondante est appliquée sur la couche de mesure (7).

8. Procédé selon la revendication 6 ou 7, d'après lequel le support plat (3) est fourni sous forme d'une céramique non frittée dans laquelle sont pratiquées les ouvertures de passage (5, 6) et qui est frittée après que les couches métalliques (5, 6) et la couche de mesure (7) ont été appliquées et après que les ouvertures de passage (5, 6) ont été remplies.

9. Procédé selon la revendication 8, d'après lequel une couche protectrice (15) céramique non frittée et munie d'une fenêtre (17) pour définir la zone de mesure est appliquée par-dessus la couche de mesure (7) et le frittage a lieu après l'application de la couche protectrice.

10. Procédé selon la revendication 8 ou 9, d'après lequel une couche protectrice (19) céramique non frittée est appliquée par-dessus les couches métalliques (9, 10) et le frittage a lieu après l'application de la couche protectrice (19).

11. Procédé selon la revendication 9 ou 10, d'après lequel les couches protectrices (15, 19) sont appliquées sous forme de feuilles à l'état cru.

12. Procédé pour contrôler la progression de la diffusion d'un premier métal dans un deuxième métal pendant un processus de diffusion, comportant les étapes suivantes :
- fournir un élément thermique (5, 6, 7, 9, 10, 12, 13) comportant une première interface (12) où le deuxième métal est en contact avec un troisième métal et une deuxième interface (13) où le deuxième métal est en contact avec le troisième métal ou le quatrième métal,
- placer l'élément thermique (5, 6, 7, 9, 10, 12, 13) de telle manière que, pendant que le processus de diffusion est réalisé, dans la zone de l'une des interfaces (12) le premier métal peut diffuser dans le deuxième métal en direction de l'interface (12) et que dans la zone de l'autre interface (13) le deuxième métal est protégé de la diffusion du premier métal,
- mesurer la différence de potentiel sur l'élément thermique (5, 6, 7, 9, 10, 12, 13) pendant le processus de diffusion.

13. Procédé selon la revendication 6, dans lequel un capteur de diffusion (1) est fabriqué selon l'une des revendications 3 à 5.

14. Procédé selon la revendication 12, dans lequel on utilise un capteur de diffusion (1) selon l'une des revendications 1 à 5.

15. Procédé de retraitement pour des composants de turbines d'après lequel le procédé selon la revendication 12 est utilisé pour contrôler la progression d'un processus de diffusion.

16. Procédé de retraitement pour des composants de turbines selon la revendication 15, utilisé pour des aubes de turbines.
